(19)

Europäisches
Patentamt
European
Patent Office
Office européen
des brevets

(11) **EP 2 357 470 A1**

(12) **EUROPEAN PATENT APPLICATION**
published in accordance with Art. 153(4) EPC

(43) Date of publication:
**17.08.2011  Bulletin 2011/33**

(51) Int Cl.:
*G01N 31/16* [(2006.01)]     *G01N 21/79* [(2006.01)]

(21) Application number: **09831468.5**

(22) Date of filing: **09.12.2009**

(86) International application number:
**PCT/CN2009/075421**

(87) International publication number:
**WO 2010/066191 (17.06.2010 Gazette 2010/24)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL**

(30) Priority: **12.12.2008  CN 200810239820**

(71) Applicant: **Jiangxi Rare Earth And Rare Metals
Tungsten Group
Nanchang, Jiangxi 330046 (CN)**

(72) Inventor: **HU, Yiqi
Nanchang
Jiangxi 330046 (CN)**

(74) Representative: **Mittler, Enrico et al
Mittler & C. S.r.l.
Viale Lombardia, 20
20131 Milano (IT)**

(54) **METHOD FOR MEASURING VANADIUM CONTENT IN A TUNGSTEN MATRIX TO WHICH VANADIUM/CHROMIUM-VANADIUM HAS BEEN ADDED**

(57)    A method for determining vanadium content in a tungsten matrix with singly added vanadium or simultaneously added chromium and vanadium, **characterized in that** a test sample is subjected to alkaline melting with sodium peroxide and water leaching followed by dry filtering, the chromium and vanadium in the filtrate are firstly reduced to low valences by a reducing agent, i.e. hydroxylamine hydrochloride, then the filtrate is adjusted to an acidity of 4-6M with nitric acid, the vanadium is oxidized in a cold state to a high valence by potassium permanganate, and the high-valent vanadium forms a ternary complex with tungstate and orthophosphate, the darkness of the color of the ternary complex is directly proportional to the vanadium content, thus the vanadium content is determined colorimetrically, and the interference of chromium is eliminated with the fact that the potassium permanganate in a cold state in the acidic condition for vanadium determination oxidizes the vanadium but not the chromium. The method of the invention is relatively suitable for determining the macro-amount vanadium content in a tungsten matrix containing macro-amount vanadium singly or containing macro-amount vanadium and chromium simultaneously, the method is fast and accurate with a relative error less than 5%, which can fully satisfy the requirements of the production process for the determination.

EP 2 357 470 A1

## Description

## Technical Field

The present invention relates to a method for determining vanadium content in a tungsten matrix with added vanadium or simultaneously added chromium and vanadium.

The term "tungstovanadophosphoric acid photometry" herein refers to the following process: a test sample is subjected to alkaline melting with sodium peroxide and water leaching followed by dry filtering, the chromium and vanadium in the filtrate are firstly reduced to low valences by a reducing agent, i.e. hydroxylamine hydrochloride, then the filtrate is adjusted to an acidity of 4-6M with nitric acid, the vanadium is oxidized in a cold state to a high valence by potassium permanganate, and the high-valent vanadium forms a ternary complex with tungstate and orthophosphate, the darkness of the color of the ternary complex is directly proportional to the vanadium content, thus the vanadium content is determined colorimetrically. The interference of chromium is eliminated by utilizing the property that the potassium permanganate in a cold state in the acidic condition for vanadium determination oxidizes the vanadium but not the chromium, chromium remains at low valence state, it does not participate in the color development reaction, and does not interfere with the determination of vanadium.

The term "matrix" herein is also referred to as "medium" or "base material".

The term "tungsten matrix" herein refers to a sample for analysis, in which all the materials and components except the analytes are tungsten, such as tungsten carbide and the like.

## Prior Art

In production of fine or ultra-fine particulate tungsten carbide powders, it is often necessary to add chromium and vanadium compounds separately or simultaneously. There are no standard macroanalytical methods for chromium and vanadium in the existing analytical methods. And as there is interference between chromium and vanadium, it becomes more difficult to measure the contents of chromium and vanadium accurately when chromium and vanadium are simultaneously added. In tungsten industry, large companies typically carry out the simultaneous determination of chromium and vanadium, etc. by means of X-ray fluorescence analyzer; and the method is fast and accurate. However, the prices of X ray fluorescence analyzer are up to millions of RMB Yuan or more, so small and medium-sized enterprises generally do not have such high-end test equipments.

Whether or not the chromium and vanadium are added at the exact amounts will directly affect the qualities of downstream hard alloy products.

In prior art, macroanalysis of vanadium is often carried out by means of redox titration. However, it is somewhat bothersome, as the results have to be corrected with the indicator at each time, based on the absolute amount of vanadium in the sample solution; and the titration coefficient of the standard solution against vanadium is very large, so the sample blank has a very significant effect on the test result; when the vanadium content is low, the effect of sample blank would result in a relative error of more than 10.00% for the test result, thus the accuracy of analysis cannot meet the requirements of production process for testing.

## Summary of the Invention

An object of the present invention is to provide a method for determining vanadium content in a tungsten matrix with added vanadium or simultaneously added chromium and vanadium, which can improve the accuracy and speed of the determination of vanadium content in a tungsten matrix with singly added vanadium or simultaneously added chromium and vanadium.

To this end, the present invention provides a method for determining vanadium content in a tungsten matrix with singly added vanadium or simultaneously added chromium and vanadium, characterized in that, a test sample is subjected to alkaline melting with sodium peroxide and water leaching followed by dry filtering, the chromium and vanadium in the filtrate are firstly reduced to low valences by a reducing agent, i.e. hydroxylamine hydrochloride, then the filtrate is adjusted to an acidity of 4-6M with nitric acid, the vanadium is oxidized in a cold state to a high valence by potassium permanganate, and the high-valent vanadium forms a ternary complex with tungstate and orthophosphate, the darkness of the color of the ternary complex is directly proportional to the vanadium content, thus the vanadium content is determined colorimetrically. The interference of chromium is eliminated according to the property that the potassium permanganate in a cold state in the acidic condition for vanadium determination oxidizes the vanadium but not the chromium.

Since the main body of tungsten participates in the formation of the ternary complex, while the excess phosphoric acid, which is another participant in the formation of the ternary complex, can coordinate with excess tungsten matrix, thus preventing tungstic acid from precipitating to affect the colorimetric determination of vanadium. Therefore, the present invention is more suitable for determining the macro-amount vanadium content in a tungsten matrix, if macro-amount chromium is also included, the interference of chromium is eliminated with the fact that the potassium permanganate in a cold state in the acidic condition for vanadium determination oxidizes the vanadium but not the chromium. As the colorimetrical coefficient of tungstovanadophosphoric acid photometry is far less than titration coefficient, sample blanks have little effects on testing results, thus the photometry has a higher accuracy of analysis than the redox titration has, and the colorimetric solution can be stable for a long time after color developing, so the test reproducibility is fine. This further illustrates that the tungstovanadophosphoric acid photometry is more suitable for the microanalysis of vanadium. The method is fast and accurate with a relative error less than 5%, which can fully satisfy the requirements of the production process for measurement.

The interference of chromium is eliminated as follows: the chromium and vanadium are firstly reduced to low valences by a reducing agent, i.e. hydroxylamine hydrochloride, in an alkaline filtrate taken separately after dry filtering, then the acidity is adjusted to 4-6M with nitric acid; after cooling, vanadium is oxidized to a high valence by potassium permanganate, chromium is not oxidized, so it does not participate in the color development reaction, therefore it does not interfere with the determination of vanadium.

**Detailed Description of the Invention**

Below is detailed description of the method for determining vanadium content in a tungsten matrix, such as tungsten carbide and the like, with singly added vanadium or simultaneously added chromium and vanadium by tungstovanadophosphoric acid photometry.

1. Applicability:

This method is useful for determining vanadium content in a tungsten matrix, such as tungsten carbide powders and the like, with singly added vanadium or simultaneously added chromium and vanadium. Measuring range: 0.05-1.00%.

2. Tips of the Method :

In a medium of nitric acid, high-valent vanadium forms a ternary complex with tungstate and orthophosphate, the darkness of the color of which is directly proportional to the vanadium content, thus the vanadium content is determined colorimetrically; and in which the interference of chromium is eliminated by utilizing the property that the potassium permanganate oxidizes the vanadium but not the chromium in appropriate acidities.

3. Reagent:

3.1 Nitric acidAR, (1 +1)
3.2 Phosphoric acid AR, (1 +1)
3.3 Sodium tungstate solution AR, (15g/L)
3.4 p-Nitrophenol solution AR, (1g/L)
3.5 Sodium peroxide AR
3.6 Hydroxylamine hydrochloride solution AR, (10g/L)
3.7 Potassium permanganate solution AR, (10g/L)
3.8 Sodium nitrite solution AR, (100g/L)
3.9 Vanadium standard solution:

3.9.1 Weighing 0.1785g of vanadium pentoxide (>99.9%) and dissolving it in a small amount of sodium hydroxide solution (10g/L), acidifying by adding a small amount of sulfuric acid (1+49), transferring it into a 1000mL volumetric flask, and diluting with water to volume and shaking well. 1mL of this solution contains 100$\mu$g of vanadium.
3.9.2 Pipetting 10.00mL vanadium standard solution (3.9.1) into a 100mL volumetric flask, and diluting to volume and shaking well. 1mL of this solution contains 10$\mu$g of Vanadium.

4. Instrument
Model 721 spectrophotometer
5. Analytical procedures:

5.1 Sample weight: weighing 0.5-1g of a sample, and being accurate to 0.0001g.

5.2 Blank test: performing a blank test along with the sample.

5.3 Measurement

5.3.1 Placing a sample (5.1) in a porcelain crucible, calcining at 780°C in a muffle furnace for 1.5-2h to convert it totally to tungsten trioxide.

5.3.2 Placing (5.3.1) in a iron crucible provided with approximately 4g of pre-placed sodium peroxide (3.5), then covering it with a thin layer of sodium peroxide, placing it in a muffle furnace at 750°C to melt until it is red and clear, then taking it out and cooling.

5.3.3 Placing it into a 300mL beaker containing 50mL hot water for leaching, eluting out from the crucible with water. Heating by an electric furnace to boiling and gently boiling for 2-3 min, taking it out and cooling, transferring the solution and precipitation from the beaker to a 100mL volumetric flask by water, diluting to volume and shaking well. Dry filtering after being clarified, pipetting 5.00-10mL filtrate into a 25mL colorimetric tube, adding one drop of hydroxylamine hydrochloride solution (3.6), shaking well and standing still for 1 min. Adding one drop of p-nitrophenol solution (3.4), neutralizing with nitric acid (3.1) just to the disappearance of the yellow-green color, (in the case of also having chromium mixed, adding 2.5mL phosphoric acid (3.2) and shaking well, adding potassium permanganate solution (3.7) dropwisely until red color appears and does not fade away in 3 minutes, adding sodium nitrite solution (3.8) dropwisely until red color disappears and adding one more drop, shaking well) and shaking well, adding 5mL nitric acid (3.1) and shaking well, adding 1.5mL sodium tungstate solution (3.3) and shaking well, cooling, diluting to volume and shaking well.

5.3.4 Heating in a boiling water bath for 20 min, taking it out and cooling. Measuring the absorbance at 420nm with a Model 721 spectrophotometer and a 3 cm colorimetric cell with water as reference solution, subtracting the absorbance for the blank solution from the measured absorbance thereof, then finding out the corresponding vanadium content from a working curve.

5.4 Plotting the working curve:

Accurately pipetting 0, 20, 40, 80, 100, and 120$\mu$g of vanadium into a set of 25mL colorimetric tubes, adding one drop of hydroxylamine hydrochloride solution (3.6), shaking well and standing still for 1 min. Next following the operations of 5.3.3 and 5.3.4. Plotting the working curve with absorbance as ordinate against vanadium content as abscissa.

6. The calculation of the results:

The vanadium content is calculated according to the following equation:

$$V\,(\%) = \frac{(r - r_0) \times V_0 \times 10^{-6}}{m \times V} \times 100\,(\%)$$

Wherein:

$r$ is the vanadium content identified from the working curve for sample solution, $\mu$g;
$r_0$ is the vanadium content identified from the working curve for blank solution, $\mu$g;
$V$ is the volume of test solution taken separately, mL;
$V_0$ is the total volume of test solution, mL;
$m$ is the sample weight, g.

**Claims**

1. A method for determining vanadium content in a tungsten matrix with singly added vanadium or simultaneously added chromium and vanadium, **characterized in that** a test sample is subjected to alkaline melting by sodium peroxide and water leaching followed by dry filtering, the chromium and vanadium in the filtrate are firstly reduced to low valences by a reducing agent of hydroxylamine hydrochloride, then the filtrate is adjusted to an acidity of 4-6M with nitric acid, the vanadium is oxidized in a cold state to a high valence by potassium permanganate, and the high-valent vanadium forms a ternary complex with tungstate and orthophosphate, the darkness of the color of the ternary complex is directly proportional to the vanadium content, thus the vanadium content is determined colorimetrically; the interference of chromium is eliminated according to such a property that the potassium perman-

EP 2 357 470 A1

ganate in a cold state in the acidic condition for vanadium determination oxidizes the vanadium but not the chromium.

2. The method for determining vanadium content in a tungsten matrix according to claim 1, **characterized in that**, the following reagents are used:

3.1 Nitric acid AR, (1 +1)
3.2 Phosphoric acid AR, (1 +1)
3.3 Sodium tungstate solution AR, (15g/L)
3.4 p-Nitrophenol solution AR, (1g/L)
3.5 Sodium peroxide AR
3.6 Hydroxylamine hydrochloride solution AR, (10g/L)
3.7 Potassium permanganate solution AR, (10g/L)
3.8 Sodium nitrite solution AR, (100g/L)
3.9 Vanadium standard solution.

3. The method for determining vanadium content in a tungsten matrix according to claim 2, **characterized in that**, the vanadium standard solution is prepared as follows:

3.9.1 Weighing 0.1785g of vanadium pentoxide (>99.9%) and dissolving it in a small amount of sodium hydroxide solution (10g/L), acidifying by adding a small amount of sulfuric acid (1+49), transferring it into a 1000mL volumetric flask, diluting with water to volume and shaking well, so 1mL of this solution contains $100\mu g$ of vanadium; and
3.9.2 Pipetting 10.00mL vanadium standard solution (3.9.1) into a 100mL volumetric flask, diluting to volume and shaking well, so 1mL of this solution contains $10\mu g$ of vanadium.

4. The method for determining vanadium content in a tungsten matrix according to claim 1, **characterized in that**, spectrophotometry is employed.

5. The method for determining vanadium content in a tungsten matrix according to claim 1, **characterized in that**, the analytical steps are as follows:

5.1 Sample weight: weighing 0,5-1g of a sample being accurate to 0.0001g;
5.2 Blank test: performing a blank test along with the sample;
5.3 Measurement;
5.4 Plotting a working curve:

accurately pipetting 0, 20, 40, 80, 100, and 120 $\mu g$ of vanadium into a set of 25mL colorimetric tubes, adding one drop of hydroxylamine hydrochloride solution (3.6), shaking well and standing still for 1 min; next following the operations of 5.3.3 and 5.3.4; then plotting the working curve with absorbance as ordinate against vanadium content as abscissa.

6. The method for determining vanadium content in a tungsten matrix according to claim 5, **characterized in that**, the measurement includes:

5.3.1 Placing a sample (5.1) in a porcelain crucible, calcining at 780°C in a muffle furnace for 1.5-2h to convert it totally to tungsten trioxide;
5.3.2 Placing (5.3.1) in a iron crucible provided with approximately 4g of pre-placed sodium peroxide (3.5), then covering it with a thin layer of sodium peroxide, placing it in a muffle furnace at 750°C to melt for 10 minutes until it is red and clear, then taking it out and cooling;
5.3.3 Placing it into a 300mL beaker containing 50mL hot water for leaching, eluting out from the crucible with water; heating by an electric furnace to boiling and gently boiling for 2-3 min, taking it out and cooling, transferring the solution and precipitation from the beaker to a 100mL volumetric flask by water, diluting to volume and shaking well; dry filtering after being clarified, pipetting 5.00-10mL filtrate into a 25mL colorimetric tube, adding one drop of hydroxylamine hydrochloride solution (3.6), shaking well and standing still for 1min, adding one drop of p-nitrophenol solution (3.4), neutralizing with nitric acid (3.1) just to the disappearance of the yellow-green color, shaking well, adding 5mL nitric acid (3.1) and shaking well, adding 2.5mL phosphoric acid (3.2) and shaking well, adding 1.5mL sodium tungstate solution (3.3) and shaking well, cooling, then diluting to volume and shaking well; and

5.3.4 Heating in a boiling water bath for 20 min, taking it out and cooling; measuring the absorbance at 420nm with a Model 721 spectrophotometer and a 3cm colorimetric cell with water as reference solution, subtracting the absorbance for the blank solution from the measured absorbance thereof, then finding out the corresponding vanadium content from the working curve.

7. The method for determining vanadium content in a tungsten matrix according to claim 6, **characterized in that**, in step 5.3.3, in the case of also having chromium mixed, pipetting 5.00-10mL filtrate into a 25mL colorimetric tube, adding one drop of hydroxylamine hydrochloride solution (3.6), shaking well and standing still for 1min, adding one drop of p-nitrophenol solution (3.4), neutralizing with nitric acid (3.1) just to the disappearance of the yellow-green color, shaking well, adding 2.5mL phosphoric acid (3.2), shaking well and cooling to room temperature, adding potassium permanganate solution (3.7) dropwisely until red color appears and does not fade away in 3 minutes, shaking while adding sodium nitrite solution (3.8) dropwisely until red color disappears and adding one more drop, shaking well, adding 5mL nitric acid (3.1) and shaking well, adding 1.5mL sodium tungstate solution (3.3) and shaking well, cooling, then diluting to volume and shaking well.

8. The method for determining vanadium content in a tungsten matrix according to claim 5, **characterized in that**, the vanadium content is calculated according to the following equation:

$$V\ (\%) = \frac{(r - r_0) \times V_0 \times 10^{-6}}{m \times V} \times 100\ (\%)$$

Wherein:

r is the vanadium content identified from the working curve for sample solution, $\mu$g;
$r_0$ is the vanadium content identified from the working curve for blank solution, $\mu$g;
V is the volume of test solution taken separately, mL;
$V_0$ is the total volume of test solution, mL; and
m is the sample weight, g.

## INTERNATIONAL SEARCH REPORT

| | International application No. |
| --- | --- |
| | PCT/CN2009/075421 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G01N

Documentation searched other than minimum documentation to the extent that such documents are included in the fields searched

Electronic data base consulted during the international search (name of data base and, where practicable, search terms used)

CNPAT & WPI & EPODOC & PAJ: vanadium, chromium, tungsten, titration, sodium peroxide, interference

**C. DOCUMENTS CONSIDERED TO BE RELEVANT**

| Category* | Citation of document, with indication, where appropriate, of the relevant passages | Relevant to claim No. |
| --- | --- | --- |
| PX | CN101424644A(JIANGXI RARE EARTH METAL TUNGSTEN GROU), 06 May 2009(06.05.2009), the whole document | 1-8 |
| A | CN101173916A(PANZHIHUA STEEL RES INST PANZHIHUA STEE),07 May 2008(07.05.2008), the whole document | 1-8 |
| A | JP5-142149A(MEIDENSHA CORP),08 Jun. 1993(08.06.1993), the whole document | 1-8 |
| A | SU1472822A(MOSCOW FINE CHEM TECHN),15 Apr. 1989(15.04.1989), the whole document | 1-8 |
| A | LI, Hui Ling et al., Study of Measuring Method for the Mixture Added Chromiun and Vanadium, Sichuan Nonferrous Metals, Jun.2007(06.2007), No.2, p37-39 | 1-8 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 01 Mar. 2010(01.03.2010) | **25 Mar. 2010 (25.03.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **HE, Wen Jing** Telephone No. (86-10)62085686 |

Form PCT/ISA /210 (second sheet) (July 2009)

**INTERNATIONAL SEARCH REPORT**
Information on patent family members

| | International application No. |
|---|---|
| | PCT/CN2009/075421 |

| Patent Documents referred in the Report | Publication Date | Patent Family | Publication Date |
|---|---|---|---|
| CN101424644A | 06.05.2009 | None | |
| CN101173916A | 07.05.2008 | CN100580450C | 13.01.2010 |
| JP5-142149A | 08.06.1993 | None | |
| SU1472822A | 15.04.1989 | None | |

Form PCT/ISA /210 (patent family annex) (July 2009)

# INTERNATIONAL SEARCH REPORT

International application No.

PCT/CN2009/075421

**A. CLASSIFICATION OF SUBJECT MATTER**

According to International Patent Classification (IPC) or to both national classification and IPC

G01N31/16 (2006.01) i
G01N21/79 (2006.01) i

Form PCT/ISA /210 (extra sheet) (July 2009)